# EUROPÄISCHE PATENTSCHRIFT

(11) **EP 0 782 541 B1**
(45) Veröffentlichungstag und Bekanntmachung des Hinweises auf die Patenterteilung: **08.12.1999**
(21) Anmeldenummer: 95932671.1
(22) Anmeldetag: 06.09.1995
(51) Int. Cl.: C01B 17/56

(54) **VERFAHREN ZUR ABTRENNUNG VON HALOGENWASSERSTOFFEN AUS SCHWEFELDIOXIDHALTIGEN GASEN**
PROCESS FOR SEPARATING HYDROGEN HALIDES FROM GASES CONTAINING SULPHUR DIOXIDE
PROCEDE DE SEPARATION D'HALOGENURES D'HYDROGENE DE GAZ RENFERMANT DE L'ANHYDRIDE SULFUREUX

(30) Priorität: 19.09.1994 DE 4433246
(43) Veröffentlichungstag der Anmeldung: 09.07.1997
(73) Patentinhaber: Aventis Research & Technologies GmbH & Co. KG, 65926 Frankfurt am Main (DE)
(72) Erfinder: RAPPOLD, Ulrich, D-64380 Rossdorf (DE); SCHICK, Wolfgang, D-65929 Frankfurt am Main (DE); SCHMID, Jörg, D-65817 Eppstein (DE); SEMEL, Joachim, D-65817 Eppstein (DE); MERTEN, Heinrich, D-65812 Bad Soden (DE); SCHUBERT, Matthias, D-65527 Niedernhausen (DE); LUFT, Gerhard, D-64367 Mühltal (DE)
(86) Internationale Anmeldenummer: EP9503497
(87) Internationale Veröffentlichungsnummer: WO9609245

(56) Entgegenhaltungen:
- DE-B- 1 085 506
- FR-A- 2 101 882
- US-A- 3 278 266
- US-A- 3 653 811

## Beschreibung

Die meisten bekannten Verfahren zur Entfernung von Halogenwasserstoffen aus Gasgemischen beruhen auf der Verwendung von Lösungen oder Suspensionen von Chemikalien, die die Halogenwasserstoffe nach dem Prinzip der Absorption binden. Hierbei werden vor allem Lösungen und Suspensionen von Alkali- oder Erdalkaliverbindungen, wie Oxide, Hydroxide oder Carbonate verwendet. Ein Verfahren, das feste Absorptionsmittel verwendet (Amonienaustauscherharz) ist aus der USP 3,653,811 bekannt.

Bei vielen industriell angewendeten absorptiven Verfahren führt der Kontakt von meist heißen Gasen mit einem flüssigen Absorbens zu einer starken Absenkung der Gastemperatur. Aufgrund des stark korrosiven Charakters vieler wasserhaltiger Gasgemische bei Taupunktsunterschreitung und der schwierigen Ableitung kalter Gase über einen Kamin muß das Gasgemisch nach der Absorption oft wieder aufgeheizt werden, was die Energiebilanz des Verfahrens deutlich verschlechtert.

Ferner sind viele Alkali- und Erdalkaliverbindungen, insbesondere Natriumhydroxid und Kaliumhydroxid, äußerst aggressive Substanzen, so daß bei dem Betrieb und der Wartung der Vorrichtung zur Behandlung der Gasgemische Vorsichtsmaßnahmen zu treffen sind.

Adsorptionsverfahren haben diese Nachteile nicht, da keine Absenkung der Temperatur und damit keine Taupunktsunterschreitung erfolgt, weshalb eine Wiederaufheizung des Gasgemisches nach der Entfernung der Halogenwasserstoffe nicht erforderlich ist. Desweiteren umgeht man bei Adsorptionsverfahren wäßrige Systeme, die aggressive Substanzen enthalten.

US-3,278,266 beschreibt die Adsorption von Halogenwasserstoff aus Dampfgemischen organischer Verbindungen. Das Adsorbens besteht aus einer oxidischen Verbindung der zweiten Hauptgruppe des Periodensystems, die auf einen Träger aufgebracht ist und läßt sich durch Desorption regenerieren.

Überraschenderweise wurde nun gefunden, daß ein derartiges Adsorbens die Möglichkeit bietet, Halogenwasserstoff aus einem schwefeldioxidhaltigen Gas selektiv zu adsorbieren und so Halogenwasserstoff von Schwefeldioxid zu trennen.

Die Erfindung betrifft somit die Verwendung eines Adsorbens aus einem porösen keramischen Trägermaterial, das mit einer Erdalkalimetallsalzlösung impräginiert wird wobei nach Verdampfen des Lösungsmittels das Erdalkalimetallsalz bei 200 bis 800°C zu Erdalkalimetalloxid · x H₂O pyrolysiert wird, wobei x eine Zahl von 0 bis 1 darstellt, zur selektiven Abtrennung von Halogenwasserstoffen aus schwefeldioxidhaltigen Gasen.

Im folgenden wird die Erfindung detailliert, insbesondere in ihren bevorzugten Ausführungsformen beschrieben.

In die Poren des keramischen Trägermaterials wird eine Lösung von Erdalkalimetallsalz eingebracht. Das keramische Trägermaterial kann auf Basis von SiO₂ oder insbesondere Al₂O₃, aber auch unter Verwendung von Aluminiumsilikaten, Zeolithen oder anderen keramischen Ausgangsmaterialien hergestellt sein. Als Erdalkalimetallsalze dienen Salze, einzeln oder in Mischung, die bei Erhitzen auf 200 bis 800°C ein aktiviertes Oxid bilden. Bevorzugt werden Magnesiumsalzlösungen verwendet, so z.B. Magnesiumcarbonat, Magnesiumchlorid, Magnesiumnitrat oder insbesondere Magnesiumacetat. Die Träger werden getrocknet, dann wird das Erdalkalimetallsalz bei der für eine Pyrolyse in den Poren erforderlichen Temperatur in aktiviertes Erdalkalimetalloxid umgewandelt. Dabei ist eine möglichst niedrige Pyrolysetemperatur wünschenswert, da dies die Adsorptionsaktivität des hergestellten Adsorbens erhöht.

Die Erfindung bietet nun die Möglichkeit Halogenwasserstoff, bevorzugt Chlorwasserstoff, aus einem schwefeldioxidhaltigen Gas selektiv zu adsorbieren und so von Schwefeldioxid zu trennen. Halogenwasserstoff wird in dem betrachteten Temperaturbereich zwischen 80 und 200°C, speziell bei 100 bis 150°C auf dem Adsorbens adsorbiert, wobei Schwefeldioxid durch die Schüttung ungehindert hindurchtritt. Im Gegensatz zu Verfahren, die bei höherer Temperatur arbeiten, wird hierbei kein Erdalkalimetallsulfat gebildet. Dies ist von großem Vorteil, da sonst bei einer Regeneration Erdalkalimetallsulfat nicht zu aktivem MgO regeneriert werden kann, so daß die Fähigkeit zur wiederholten Halogenwasserstoffadsorption nicht gegeben wäre.

Das mit Bromwasserstoff, Iodwasserstoff oder insbesondere Chlorwasserstoff beladene Adsorbens kann dann bei höheren Temperaturen zwischen 100 und 800°C, bevorzugt bei 400 bis 450°C, wieder desorbiert werden. Hierbei muß das Adsorbens mit einem wasserhaltigen, sauerstofffreien Gasstrom umspült werden, um das in den Poren des Trägers abgeschiedene Erdalkalimetallhalogenid zu dem entsprechenden Halogenwasserstoff und Erdalkalimetalloxid zu zersetzen. Alternativ kann zur Desorption des mit Bromwasserstoff, Iodwasserstoff oder Chlorwasserstoff beladenen Adsorbens eine trockene, sauerstoffhaltige Atmosphäre in demselben Temperaturbereich eingesetzt werden. In diesem Fall bildet sich neben aktivem Erdalkalimetalloxid das entsprechende Halogen. Das so regenerierte Adsorbens kann wieder zu Adsorptionszwecken eingesetzt werden.

Zum weiteren Verständnis der Erfindung wird eine bevorzugte Ausführungsform in Form eines Beispiels beschrieben.

### Beispiel 1:

250 ml (Schütthöhe 10 cm) entsprechend ca. 260 g des nach US 3,278,266 hergestellten Adsorbens (3.1 Gew.-% Magnesiumoxid) werden in einem zylindrischen Festbettrohradsorber zur Adsorption von Chlorwasserstoff eingesetzt. Der Gasvolumenstrom beträgt 1,6 Nm³/h. Die Temperatur im Adsorber beträgt 120°C. Das Gas besteht aus Stickstoff mit 7,5 Vol.-% Sauerstoff, 10 Vol.-% Wasserdampf und 2.000 mg/Nm³ Chlorwasserstoff sowie 2.800 mg/Nm³ Schwefeldioxid. Die Adsorptionszeit beträgt 5 Stunden. Ergebnis:

| | |
|---|---|
| Chlorwasserstoff-Beladung des Adsorbens zu Beginn: | 0 Gew.-% |
| Chlorwasserstoff-Beladung des Adsorbens am Ende: | 3,4 Gew.-% |
| Chlorwasserstoff-Durchbruch nach 50 Minuten: | 10 % |
| Chlorwasserstoff-Durchbruch nach 100 Minuten: | 23 % |
| Chlorwasserstoff-Durchbruch nach 300 Minuten: | 64 % |
| Schwefeldioxid-Durchbruch zu Beginn: | 70 % |
| Schwefeldioxid-Durchbruch am Ende: | 100 % |

## Patentansprüche

1. Verwendung eines Adsorbens zur selektiven Abtrennung von Halogenwasserstoffen aus schwefeldioxidhaltigen Gasen, dadurch gekennzeichnet, daß das Adsorbens aus einem porösen keramischen Trägermaterial besteht, das mit einer Erdalkalimetallsalzlösung imprägniert wird, wobei nach Verdampfen des Lösungsmittels das Erdalkalimetallsalz bei 200 bis 800°C zu Erdalkalimetalloxid · x H₂O pyrolysiert wird, wobei x eine Zahl von 0 bis 1 darstellt.

## Claims

1. Use of an adsorbent for the selective separation of hydrogen halides from gases containing sulphur dioxide, characterised in that the adsorbent consists of a porous ceramic carrier material which is impregnated with an alkaline earth metal salt solution, where after evaporation of the solvent the alkaline earth metal salt is pyrolysed at 200 to 800°C to form alkaline earth metal oxide · x H₂O, in which x represents a number from 0 to 1.

## Revendications

1. Utilisation d'un adsorbant pour la séparation sélective d'halogénures d'hydrogène de gaz renfermant de l'anhydride sulfureux, caractérisé en ce que l'adsorbant consiste en un support en céramique poreuse imprégné d'une solution d'un sel de métal alcalinoterreux, le sel de métal alcalinoterreux étant pyrolysé - après évaporation du solvant - à une température de 200 à 800°C en un oxyde de metal alcalinoterreux · x H₂O, x représentant un chiffre de 0 à 1.
